# EUROPEAN PATENT SPECIFICATION

(11) **EP 3 934 572 B1**
(45) Date of publication and mention of the grant of the patent: **02.08.2023**
(21) Application number: 20709554.8
(22) Date of filing: 05.03.2020
(51) Int. Cl.: A61C 1/08, F21V 8/00, G02B 6/42, A61C 17/22, A46B 15/00

(54) **ORAL CARE APPLIANCE**
MUNDPFLEGEGERÄT
APPAREIL DE SOINS BUCCODENTAIRES

(30) Priority: 08.03.2019 US 201962815429 P
(43) Date of publication of application: 12.01.2022
(73) Proprietor: Koninklijke Philips N.V., 5656 AG Eindhoven (NL)
(72) Inventor: WANG, Tianyi, 5656 AE Eindhoven (NL)
(74) Representative: Philips Intellectual Property & Standards
(86) International application number: PCT/EP2020/055858
(87) International publication number: WO 2020/182614

(56) References cited:
- WO-A1-2016/178962
- DE-A1- 4 032 779
- US-A1- 2006 061 986
- US-A1- 2015 335 145
- US-A1- 2015 369 991
- US-B1- 9 462 878

## Description

### Field of the Disclosure

The present invention is directed generally to oral care appliances, more specifically to oral care appliances having a fiber-based light ring.

### Background

US 2015/335145 discloses an oral care implement, which comprising a head carrying at least one cleaning element; and a handle having a distal end, a proximal end, a first part and a second part attached to the first part, wherein a first surface of the first part and a second surface of the second part together define an exterior surface of the handle; wherein the first part is connected to the head at a distal end of the handle and the second part defines the proximal end of the handle; and wherein the second part houses an assembly comprising a timer and a user-notification device that is configured to output a notification in dependence on a state of the timer. The user-notification device comprises a device configured to output a notification, or notifications, by emitting visible light; and the device comprises at least one light emitting diode.

US 9462878 discloses an oral care brush includes a brush head coupled to a handle at an articulation point. The handle can include one or more light sources.

Oral care appliances, for example, power toothbrushes, contain components which can detect various conditions or states of the oral care appliance and provide feedback to the user. For example, feedback indicating that the user is applying excessive pressure between the user's teeth and the bristles of a power toothbrush is undesirable. In use, the bristles of a toothbrush should lightly skim the tooth surfaces to remove bacteria, food debris, and plaque. Increasing the pressure with which the user applies the bristles to the teeth does not aid the cleaning process and may damage the internal components of the power toothbrush and/or damage the user's teeth and gums. Additionally, increasing the pressure on the bristles may slow the speed of bristle vibration or stop the bristles from moving across the teeth lowering their effectiveness.

Some oral care appliances provide visual feedback to users in the form light emitted from the appliance. However, during use, the user may rotate or otherwise displace the oral care appliance such that the emitted light is diminished and/or obscured with respect to the user's eyes and the user may not appreciate the feedback provided.

### Summary of the Disclosure

The invention is defined by the independent claims. The dependent claims define advantageous embodiments.

The present invention relates to an oral care appliance that provides feedback to a user, for example, an oral care appliance that provides feedback to the user in the form of light emitted from a second end of the oral care appliance where the second end is the end of the oral care appliance that is farthest from the user's mouth when in use, the light being emitted by a coiled or wounded light-diffusing fiber to provide a more homogeneous angular and spatial distribution of light to the user while the oral care appliance is in use.

These and other aspects of the various embodiments will be apparent from and elucidated with reference to the embodiment(s) described hereinafter.

### Brief Description of the Drawings

In the drawings, like reference characters generally refer to the same parts throughout the different views. Also, the drawings are not necessarily to scale, emphasis instead generally being placed upon illustrating the principles of the various embodiments.
FIG. 1 is a bottom perspective view of an oral care appliance according to the present invention.
FIG. 2 is a partially exploded view of an oral care appliance according to the present invention.
FIG. 3 is a partial cross-sectional view of an oral care appliance according to the present invention.
FIG. 4 is a partial cross-sectional view of an oral care appliance according to the present invention.
FIG. 5 is a partial cross-sectional view of an oral care appliance according to the present invention.
FIG. 6 is a partial cross-sectional view of an oral care appliance according to the present invention.

### Detailed Description of Embodiments

The present disclosure describes various embodiments of an oral care appliance that provides feedback to a user, specifically, an oral care appliance that provides feedback to the user in the form of light emitted from a second end of the oral care appliance where the second end is the end of the oral care appliance that is farthest from the user's mouth when in use. Even more specifically to an oral care appliance which provides feedback to the user in the form of light emitted by a light-diffusing fiber to provide a more homogeneous distribution of light to the user while the oral care appliance is in use.

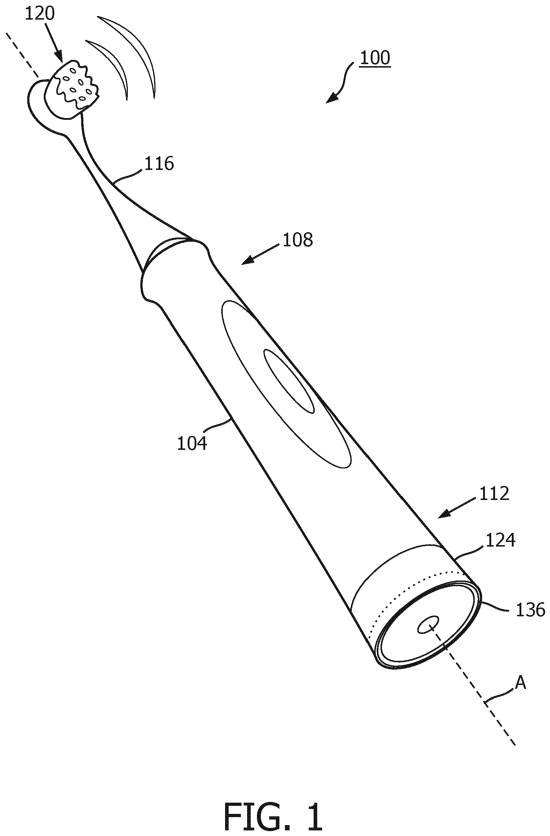

Referring to the figures, FIG. 1 is a bottom perspective view of oral care appliance 100 according to the present invention. Oral care appliance 100 includes housing 104 having a first end 108 and a second end 112. First end 108 of housing 104 is arranged to engage with neck member 116 which includes brush head 120. Brush head 120 is arranged to oscillate and/or vibrate within a user's mouth and clean the user's teeth during use of oral care appliance 100. As illustrated in FIG. 1, second end 112 of housing 104 is at least partially transparent, e.g., housing 104 has transparent section 124. Housing 104, as well as neck member 116 and transparent section 124 can be made of plastic materials, e.g., Poly(methyl methacrylate) (PMMA),Polyethylene Terephthalate (PET), High-Density Polyethylene (HDPE), Polyvinyl Chloride (PVC), Low-Density Polyethylene (LDPE), Polypropylene (PP), Polystyrene (PS), or any combination thereof.

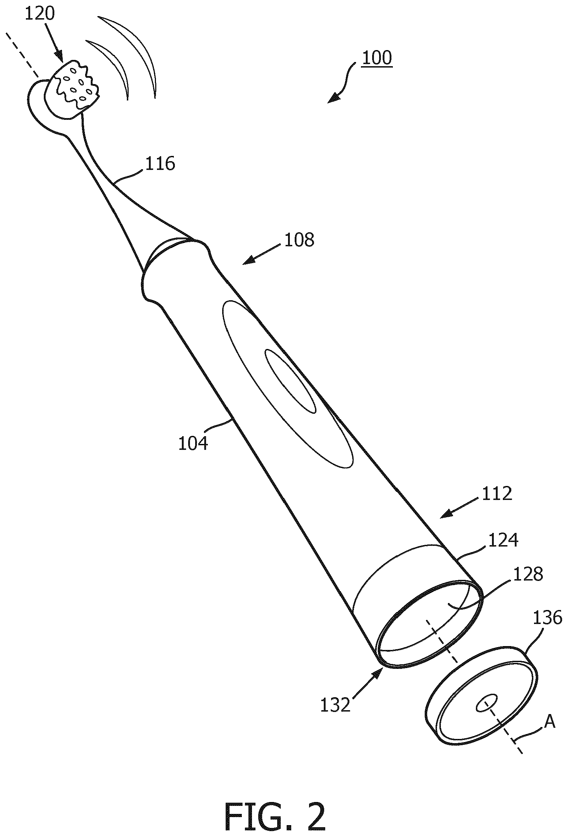

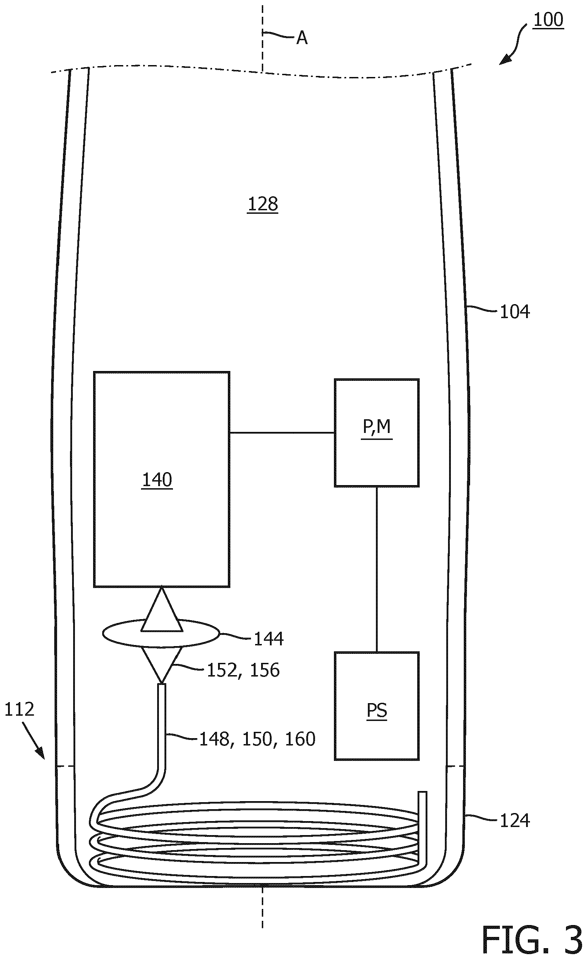

Housing 104 is substantially hollow creating a vertical cavity, i.e., cavity 128 (illustrated in FIGS. 2-6) arranged along axis A which contains the various components needed to drive a shaft (not shown) connected to brush head 120. It should be appreciated that, for the sake of clarity, the mechanical components utilized to create operational oscillation of brush head 120, e.g., a motor, magnetic stator assemblies, and/or drive shaft mechanisms, will not be discussed in detail within this disclosure. Second end 112 of housing 104 further includes aperture 132 (shown in FIG. 2) which is arranged to receive and engage with plug 136. As illustrated in FIG. 2, it should be appreciated that, in the alternative to, or in addition to, providing a transparent section 124 at second end 112 of housing 104, plug 136 may be transparent, partially transparent, or have a portion that is at least partially transparent. Transparent section 124 and/or transparent plug 136 are utilized to guide light produced by light-diffusing fiber 148 (shown in FIG. 3), which is discussed in detail below. It should be appreciated that, in addition to transparent section 124 and/or transparent plug 136, a light guide may be provided (not shown) which can be positioned proximate second end 112 of housing 104 which can further distribute light produced by the various light sources disclosed below.

FIG. 3 illustrates one example of the internal components utilized in the present disclosure. Specifically, FIG. 3 illustrates a partial cross-sectional view of the components arranged within cavity 128 of oral care appliance 100. Cavity 128 includes light source 140, first lens 144, and light-diffusing fiber 148. Light source 140 can include a type of Light-Emitting Diode (LED), an Organic Light Emitting Diode (OLED), a Polymer Light-Emitting Diode (PLED)or a laser. The laser can be selected from: a semiconductor laser (diode laser), a solid-state laser, a dye laser, a chemical laser, a gas laser, or any laser capable of being mounted within cavity 128 of oral care appliance 100. Light source 140 is arranged to produce a first light, i.e., first light 152. First lens 144 is arranged to focus first light 152 into a focused beam 154 where focused beam 152 has a beam numerical aperture 156. First lens 144 can be a micro lens or any lens with a clear aperture ranging from 0.5-5 mm, or for example, from 1-3 mm, and have a focal length that is as short as possible, e.g., 1-3 mm. Light-diffusing fiber 148 is a glass optical fiber having an operational wavelength range, for example, between 400-1000 nm, i.e., is able to receive and subsequently emit at least radiation having a wavelength that is within the visible electromagnetic spectrum (i.e., 400-700 nm). Light-diffusing fiber 148 is arranged to emit light in 360 degrees about a central axis running parallel with the body fiber if the fiber was laid flat and straight (not shown). Additionally, light-diffusing fiber 148 has a viewing angle of approximately 120 degrees along the central axis of the fiber if the fiber was laid flat and straight (not shown). Although the foregoing description and portions of the description that follow describe the use of a first lens, i.e., first lens 144, it should be appreciated that more than one lens may be provided in any conceivable combination capable of optically couple and/or mixing and/or focusing light created by light source 140.

Cavity 128 may further include a processor P and a memory M. Memory M is arranged to store, and processor P is arranged to execute, a first set of non-transitory computer readable instructions to associate a plurality of input conditions with a plurality of feedback signals. For example, processor P and memory M are arranged to receive at least one input from a sensor or other device associated with oral care appliance 100. The at least one input may indicate that the pressure applied to brush head 120 exceeds a predefined threshold, that the user has been using the appliance for too long of a duration, or the angle that the user is brushing their teeth is non-ideal for cleaning purposes. In one example, i.e., when the pressure on brush head 120 exceeds a predefined threshold, feedback to the user may indicate that the pressure provided is too high. Processor P and memory M may subsequently provide power from power source PS, e.g., a battery, to light source 140 such that light source 140 produces first light 152 which can indicate to the user that the pressure applied to brush head 120 exceeds the predetermined threshold. It should be appreciated that the feedback to the user can vary based on the particular input condition, e.g., the color or intensity of light produced by light source 140 may be associated with a particular input condition, or the total time the feedback signal is produced may be associated with a particular input condition, or a predefined cadence, i.e., a pulse of light over a predefined time, may be associate with a particular input condition.

Light-diffusing fiber 148 further includes a light-diffusing fiber core 150 having a fiber numerical aperture 160. Although not illustrated to scale in FIG. 3, it should be appreciated that beam numerical aperture 156 is substantially the same as fiber numerical aperture 160 of light-diffusing fiber 148. However, the beam numerical aperture can be smaller than that of the fiber numerical aperture. This arrangement allows for first light 152 produced by light source 140 and focused into focused beam 152 to pass through first lens 144 and be focused into the first end of light-diffusing fiber 148 such that a substantial quantity of the light produced by light source 140 enters light-diffusing fiber core 150 of light-diffusing fiber 148. In other words, first lens 144 optically couples first light 152 produced by light source 140 with light-diffusing fiber 148. It should be appreciated that light source 140 could be placed a very short distance from the end of light-diffusing fiber 148, e.g., within 0.5 mm, such that a substantial amount of first light 152 emitted by light source 140 would enter the first end of light-diffusing fiber 148, removing the need for a coupling lens, i.e., first lens 144.

Within cavity 128 of housing 104, light-diffusing fiber 148 is coiled or wound, about axis A, is arranged at second end 112 of housing 104, and arranged proximate to plug 136 such that any light emitted from light-diffusing fiber 148 through transparent portion 124 (shown in FIGS. 1 and 3-6) and/or transparent plug 136 (shown in FIG. 2) is visible to the user regardless of how or at what angle the user is holding oral care appliance 100. For example, if the user is rotating housing 104 while using oral care appliance 100, the light produced by light-diffusing fiber 148 which passes through transparent portion 124 and/or transparent plug 136, can be seen by the user at the same intensity and clarity throughout the entire 360 degrees of potential rotation of the appliance without experiencing weak spots or complete obscuration of the light emitted by the fiber.

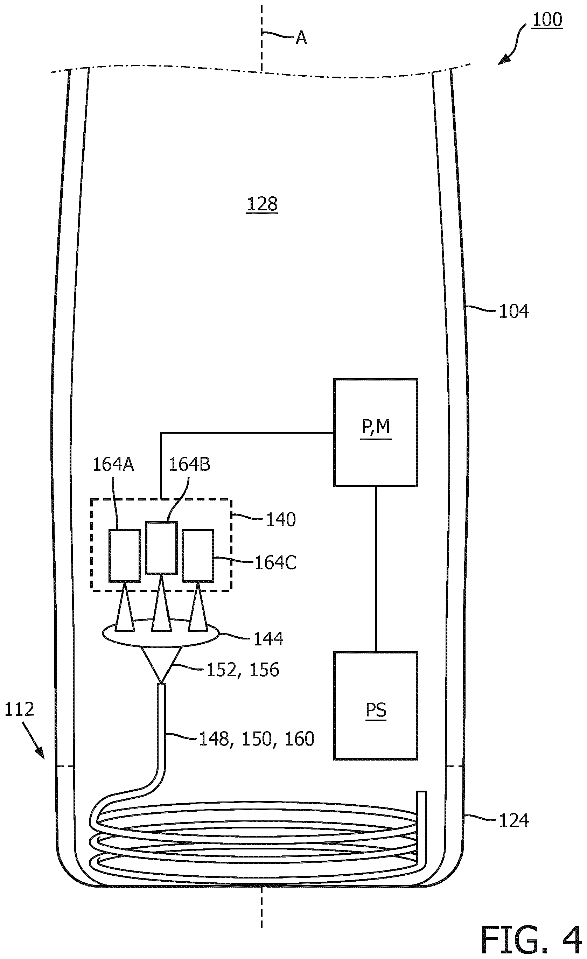

FIG. 4 illustrates a partial cross-sectional view of oral care appliance 100 according to the present disclosure. FIG. 4 illustrates that light source 140 may include multiple color light sources, e.g., multiple LEDs (or multi-color LEDs), OLEDs, PLEDs, or lasers (selected from the types of lasers recited above), each producing a certain spectral range of light that can be focused through a prism (not shown) and/or lens(es)144 into light-diffusing fiber 148. In other words, each light source of light source 140 may be optically coupled to light-diffusing fiber 148. In one example, light source 140 may include three sub-light sources, i.e., first sub-light source 164A, second sub-light source 164B, and third sub-light source 164C. In one example, each sub-light source 164A-C can produce light with the same characteristics or each can produce light having different characteristics, e.g., first sub-light source 164A can produce light in the portion of the electromagnetic spectrum associated with red light, second-sub-light source 164B can produce light in the portion of the electromagnetic spectrum associated with green light, and third sub-light source 164C can produce light in the portion of the electromagnetic spectrum associated with blue light. These characteristics can be mixed and blended between each sub-light source to produce a substantially homogenous output, i.e., first light 152. Optionally, each sub-light source 164A-C may be associated with a respective sub-lens, i.e., first sub lens 168A (not shown), second sub-lens 168B (not shown), and third sub-lens 168C (not shown), where each sub-lens 168A-C (not shown) is arranged to collimate and/or focus, i.e., optically couple, the light produced by each sub-light source 164A-C, respectively, with a prism (not shown) and/or first lens 144. These sub-lenses 168A-CS, (not shown) can be arranged between each respective sub-light source 164A-C and a prism (not shown) and/or first lens 144. It should also be appreciated that sub-light sources 164A-C could be placed a very short distance from the end of light-diffusing fiber 148, e.g., within 0.5 mm, such that a substantial amount of first light 152 emitted by each sub-light source enters the first end of light-diffusing fiber 148, removing the need for a coupling lens, i.e., first lens 144.

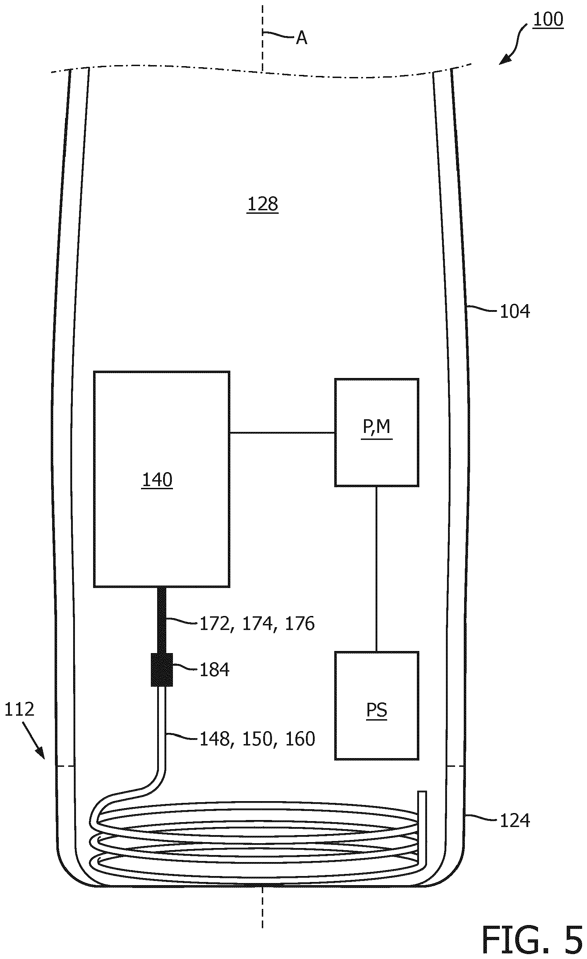

FIG. 5 illustrates a partial cross-sectional view of oral care appliance 100 according to the present disclosure. Specifically, FIG. 5 illustrates that light source 140 may be a diode fiber laser. If light source 140 takes the form of a diode fiber laser, light source 140 further includes fiber optic output fiber 172 having a fiber optic output fiber core 174. Fiber optic output fiber core 174 has first fiber core diameter 176. Additionally, light-diffusing fiber core 150 of light-diffusing fiber 148 has a second core fiber diameter 180. It should be appreciated that, although not shown to scale, the first core fiber diameter 176 and second core fiber diameter 180 are substantially identical. However, it should be appreciated that other arrangements are possible, e.g., first core fiber diameter 176 could be smaller than second core fiber diameter 180. Fiber optic output fiber 172 can be optically coupled to light-diffusing fiber 148 via fiber splice 184. In other words, fiber splice 184 is arranged between fiber optic output fiber 172 and light-diffusing fiber 148. Fiber splice 184 can be heated, fused, and/or mechanically glued between the fiber optic output fiber 172 and light-diffusing fiber 148.

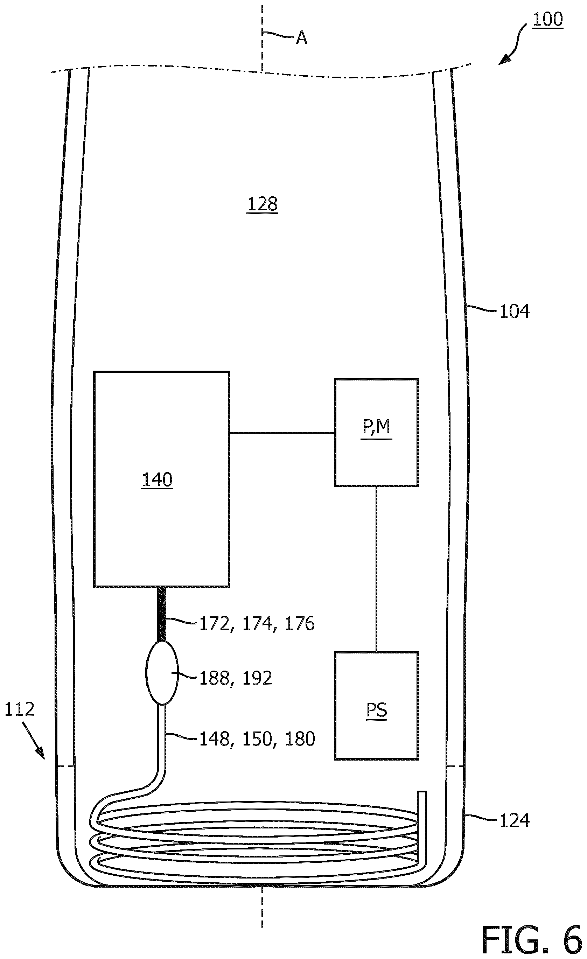

FIG. 6 is another partial cross-sectional view of oral care appliance 100 according to the present invention. FIG. 6 illustrates that when light source 140 is a diode fiber laser, fiber optic output fiber 172 can be optically coupled to light-diffusing fiber 148 via a lens, e.g., a gradient-index (GRIN) lens 188. In other words, GRIN lens 188 is arranged between fiber optic output fiber 172 and light-diffusing fiber 148. GRIN lens 188 can be mechanically glued to the fiber optic output fiber 172 and light-diffusing fiber 148.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary will refer to the inclusion of exactly one element of a number or list of elements. In general, the term "or" as used herein shall only be interpreted as indicating exclusive alternatives (i.e. "one or the other but not both") when preceded by terms of exclusivity, such as "one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

In the claims, as well as in the specification above, all transitional phrases such as "comprising," "including," "carrying," "having," "containing," "holding," "and the like are to be understood to be open-ended, i.e., to mean including but not limited to.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the invention, inventive embodiments may be practiced otherwise than as specifically described.

## Claims

1. An oral care appliance (100) comprising:
a housing (104), the housing comprising:
a first end (108);
a second end (112), wherein the second end is at least partially transparent; and,
a cavity (128), the cavity comprising:
a light source (140); and **characterized by**,
a light-diffusing fiber (148) optically coupled to the light source (140) and arranged within the second end (112) of the housing (104), coiled or wound about a central axis (A) running through the center of the cavity (128) from the first end (108) to the second end (112); wherein the light-diffusing fiber (148) is arranged to produce a first light (152) visible through the second end of the housing.

2. The oral care appliance of claim 1, wherein the at least one light source (140) is selected from: a Light Emitting Diode (LED), an Organic Light Emitting Diode (OLED), a Polymer Light-Emitting Diode (PLED), or a laser.

3. The oral care appliance of claim 2, wherein the light source (140) is optically coupled to the light-diffusing fiber (148) via a first lens (144).

4. The oral care appliance of claim 3, wherein the light-diffusing fiber (148) has a light-diffusing fiber core (150) having a fiber numerical aperture (160) and the first lens (144) generates a focused beam (154) having a beam numerical aperture (156), where the beam numerical aperture is less than or substantially equal to the fiber numerical aperture.

5. The oral care appliance of claim 1, wherein the light source (140) is a laser, the laser having a fiber optic output fiber (172), the fiber optic output fiber (172) having a fiber optic output fiber core (174) and the fiber optic output fiber core having a first core diameter (176).

6. The oral care appliance of claim 5, wherein the light-diffusing fiber (148) has a light-diffusing fiber core (150) having a second core diameter (180) where the first core diameter and the second core diameter are substantially equal.

7. The oral care appliance of claim 5, wherein the laser is optically coupled to the light-diffusing fiber by a fiber splice (184) or a Gradient-Index (GRIN) (188) lens.

8. An oral care appliance (100) comprising:
a housing (104), the housing comprising:
a first end (108);
a second end (112), the second end having an aperture (132);
an at least partially transparent plug (136) operatively arranged to engage with the aperture (132) of the second end (112) of the housing (104); and,
a cavity (128), the cavity comprising:
a light source (140); and **characterized by**,
a light-diffusing fiber (148) optically coupled to the light source and arranged within the second end of the housing, coiled or wound about a central axis (A) running through the center of the cavity (128) from the first end (108) to the second end (112), wherein the light-diffusing fiber (148) is arranged to produce a first light (152) visible through the second end (112) of the housing (104).

9. The oral care appliance of claim 8, wherein the light source (140) is selected from: a Light Emitting Diode (LED), an Organic Light Emitting Diode (OLED), a Polymer Light-Emitting Diode (PLED), or a laser.

10. The oral care appliance of claim 9, wherein the light source (140) is optically coupled to the light-diffusing fiber (148) via a first lens (144).

11. The oral care appliance of claim 10, wherein the light-diffusing fiber (148) has light-diffusing fiber core (150) having a fiber numerical aperture (160) and the first lens (144) generates a focused beam (154) having a beam numerical aperture (156), where the beam numerical aperture is less than or substantially equal to the fiber numerical aperture.

12. The oral care appliance of claim 8, wherein the light source (140) is a laser, the laser having a fiber optic output fiber (172), the fiber optic output fiber (172) having a fiber optic output fiber core (174) and the fiber optic output fiber core having a first core diameter (176).

13. The oral care appliance of claim 12, wherein the light-diffusing fiber (148) has a light-diffusing fiber core (150) having a second core diameter (180) where the first core diameter and the second core diameter are substantially equal.

14. The oral care appliance of claim 12, wherein the laser is optically coupled to the light-diffusing fiber (148) by a fiber splice (184) or a Gradient-Index (GRIN) lens (188).

15. The oral care appliance of claim 14, wherein the GRIN lens has a GRIN lens numerical aperture less than or substantially equal to a fiber numerical aperture (160) of a light-diffusing fiber core (150) of the light-diffusing fiber (148).

## Patentansprüche

1. Mundpflegegerät (100), umfassend:
ein Gehäuse (104), das Gehäuse umfassend:
ein erstes Ende (108);
ein zweites Ende (112), wobei das zweite Ende mindestens teilweise transparent ist; und
einen Hohlraum (128), der Hohlraum umfassend:
eine Lichtquelle (140); und **gekennzeichnet durch**
eine lichtstreuende Faser (148), die optisch mit der Lichtquelle (140) gekoppelt und innerhalb des zweiten Endes (112) des Gehäuses (104) angeordnet ist, die um eine mittlere Achse (A) gewickelt oder gewunden ist, die von dem ersten Ende (108) zu dem zweiten Ende (112) durch die Mitte des Hohlraums (128) verläuft; wobei die lichtstreuende Faser (148) angeordnet ist, um ein erstes Licht (152) zu erzeugen, das durch das zweite Ende des Gehäuses zu sehen ist.

2. Mundpflegegerät nach Anspruch 1, wobei die mindestens eine Lichtquelle (140) ausgewählt ist aus: einer lichtemittierenden Diode (LED), einer organischen lichtemittierenden Diode (OLED), einer polymeren lichtemittierenden Diode (PLED) oder einem Laser.

3. Mundpflegegerät nach Anspruch 2, wobei die Lichtquelle (140) über eine erste Linse (144) optisch mit der lichtstreuenden Faser (148) gekoppelt ist.

4. Mundpflegegerät nach Anspruch 3, wobei die lichtstreuende Faser (148) einen lichtstreuenden Faserkern (150) aufweist, der eine numerische Faserapertur (160) aufweist und die erste Linse (144) einen fokussierten Strahl (154) erzeugt, der eine numerische Strahlapertur (156) aufweist, wobei die numerische Strahlapertur kleiner als oder im Wesentlichen gleich wie die numerische Faserapertur ist.

5. Mundpflegegerät nach Anspruch 1, wobei die Lichtquelle (140) ein Laser ist und der Laser eine faseroptische Ausgangsfaser (172) aufweist, wobei die faseroptische Ausgangsfaser (172) einen faseroptischen Ausgangsfaserkern (174) aufweist und der faseroptische Ausgangsfaserkern einen ersten Kerndurchmesser (176) aufweist.

6. Mundpflegegerät nach Anspruch 5, wobei die lichtstreuende Faser (148) einen lichtstreuenden Faserkern (150) aufweist, der einen zweiten Kerndurchmesser (180) aufweist, wobei der erste Kerndurchmesser und der zweite Kerndurchmesser im Wesentlichen gleich sind.

7. Mundpflegegerät nach Anspruch 5, wobei der Laser durch eine Faserspleißung (184) oder eine Linse mit Gradienten-Index (GRIN) (188) optisch mit der lichtstreuenden Faser gekoppelt ist.

8. Mundpflegegerät (100), umfassend:
ein Gehäuse (104), das Gehäuse umfassend:
ein erstes Ende (108);
ein zweites Ende (112), wobei das zweite Ende eine Apertur (132) aufweist;
einen mindestens teilweise transparenten Stopfen (136), der funktionsfähig angeordnet ist, um die Apertur (132) des zweiten Endes (112) des Gehäuses (104) einzugreifen; und
einen Hohlraum (128), der Hohlraum umfassend:
eine Lichtquelle (140); und **gekennzeichnet durch**
eine lichtstreuende Faser (148), die optisch mit der Lichtquelle gekoppelt und innerhalb des zweiten Endes des Gehäuses angeordnet ist, die um eine mittlere Achse (A) gewickelt oder gewunden ist, die von dem ersten Ende (108) zu dem zweiten Ende (112) durch die Mitte des Hohlraums (128) verläuft, wobei die lichtstreuende Faser (148) angeordnet ist, um ein erstes Licht (152) zu erzeugen, dass durch das zweite Ende (112) des Gehäuses (104) zu sehen ist.

9. Mundpflegegerät nach Anspruch 8, wobei die Lichtquelle (140) ausgewählt ist aus: einer lichtemittierenden Diode (LED), einer organischen lichtemittierenden Diode (OLED), einer polymeren lichtemittierenden Diode (PLED) oder einem Laser.

10. Mundpflegegerät nach Anspruch 9, wobei die Lichtquelle (140) über eine erste Linse (144) optisch mit der lichtstreuenden Faser (148) gekoppelt ist.

11. Mundpflegegerät nach Anspruch 10, wobei die lichtstreuende Faser (148) einen lichtstreuenden Faserkern (150) aufweist, der eine numerische Faserapertur (160) aufweist und die erste Linse (144) einen fokussierten Strahl (154) erzeugt, der eine numerische Strahlöffnung (156) aufweist, wobei die numerische Strahlöffnung kleiner als oder im Wesentlichen gleich wie die numerische Faserapertur ist.

12. Mundpflegegerät nach Anspruch 8, wobei die Lichtquelle (140) ein Laser ist und der Laser eine faseroptische Ausgangsfaser (172) aufweist, wobei die faseroptische Ausgangsfaser (172) einen faseroptischen Ausgangsfaserkern (174) aufweist und der faseroptische Ausgangsfaserkern einen ersten Kerndurchmesser (176) aufweist.

13. Mundpflegegerät nach Anspruch 12, wobei die lichtstreuende Faser (148) einen lichtstreuenden Faserkern (150) aufweist, der einen zweiten Kerndurchmesser (180) aufweist, wobei der erste Kerndurchmesser und der zweite Kerndurchmesser im Wesentlichen gleich sind.

14. Mundpflegegerät nach Anspruch 12, wobei der Laser durch eine Faserspleißung (184) oder eine Linse mit Gradienten-Index (GRIN) (188) optisch mit der lichtstreuenden Faser (148) gekoppelt ist.

15. Mundpflegegerät nach Anspruch 14, wobei die GRIN-Linse eine numerische Apertur der GRIN-Linse aufweist, die kleiner als oder im Wesentlichen gleich wie eine numerischen Faserapertur (160) eines lichtstreuenden Faserkerns (150) der lichtstreuenden Faser (148) ist.

## Revendications

1. Appareil d'hygiène buccale (100) comprenant:
un logement (104), le logement comprenant:
une première extrémité (108);
une seconde extrémité (112), la seconde extrémité étant au moins partiellement transparente; et,
une cavité (128), la cavité comprenant:
une source lumineuse (140); et **caractérisé par**,
une fibre diffusant la lumière (148) couplée optiquement à la source lumineuse (140) et agencée à l'intérieur de la seconde extrémité (112) du boîtier (104), enroulée ou enroulée autour d'un axe central (A) traversant le centre de la cavité (128) de la première extrémité (108) à la seconde extrémité (112); dans lequel la fibre diffusant la lumière (148) est agencée pour produire une première lumière (152) visible à travers la seconde extrémité du boîtier.

2. Appareil d'hygiène buccale selon la revendication 1, dans lequel la au moins une source lumineuse (140) est choisie parmi: une diode électroluminescente (LED), une diode électroluminescente organique (OLED), une diode électroluminescente polymère (PLED), ou un laser.

3. Appareil d'hygiène buccale selon la revendication 2, dans lequel la source de lumière (140) est optiquement couplée à la fibre diffusant la lumière (148) via une première lentille (144).

4. Appareil d'hygiène buccale selon la revendication 3, dans lequel la fibre diffusant la lumière (148) a une âme de fibre diffusant la lumière (150) ayant une ouverture numérique de fibre (160) et la première lentille (144) génère un faisceau focalisé (154) ayant une ouverture numérique de faisceau (156), où l'ouverture numérique de faisceau est inférieure ou sensiblement égale à l'ouverture numérique de fibre.

5. Appareil d'hygiène buccale selon la revendication 1, dans lequel la source de lumière (140) est un laser, le laser ayant une fibre de sortie à fibre optique (172), la fibre de sortie à fibre optique (172) ayant une âme de fibre de sortie à fibre optique (174) et le coeur de fibre de sortie de fibre optique ayant un premier diamètre de coeur (176).

6. Appareil d'hygiène buccale selon la revendication 5, dans lequel la fibre diffusant la lumière (148) a une âme de fibre diffusant la lumière (150) ayant un second diamètre d'âme (180) où le premier diamètre d'âme et le second diamètre d'âme sont sensiblement égaux.

7. Appareil d'hygiène buccale selon la revendication 5, dans lequel le laser est optiquement couplé à la fibre diffusant la lumière par une épissure de fibre (184) ou une lentille à indice de gradient (GRIN) (188).

8. Appareil d'hygiène buccale (100) comprenant:
un logement (104), le logement comprenant:
une première extrémité (108);
une seconde extrémité (112), la seconde extrémité ayant une ouverture (132);
un bouchon au moins partiellement transparent (136) agencé de manière fonctionnelle pour s'engager avec l'ouverture (132) de la seconde extrémité (112) du boîtier (104); et,
une cavité (128), la cavité comprenant:
une source lumineuse (140); et **caractérisé par**,
une fibre diffusant la lumière (148) couplée optiquement à la source lumineuse et agencée à l'intérieur de la seconde extrémité du boîtier, enroulée ou enroulée autour d'un axe central (A) traversant le centre de la cavité (128) de la première extrémité (108) à la seconde extrémité (112), dans lequel la fibre diffusant la lumière (148) est agencée pour produire une première lumière (152) visible à travers la seconde extrémité (112) du boîtier (104).

9. Appareil d'hygiène buccale selon la revendication 8, dans lequel la source lumineuse (140) est choisie parmi:
une diode électroluminescente (LED), une diode électroluminescente organique (OLED), une diode électroluminescente polymère (PLED), ou un laser.

10. Appareil d'hygiène buccale selon la revendication 9, dans lequel la source de lumière (140) est optiquement couplée à la fibre diffusant la lumière (148) via une première lentille (144).

11. Appareil d'hygiène buccale selon la revendication 10, dans lequel la fibre diffusant la lumière (148) a une âme de fibre diffusant la lumière (150) ayant une ouverture numérique de fibre (160) et la première lentille (144) génère un faisceau focalisé (154) ayant une ouverture numérique de faisceau (156), où l'ouverture numérique de faisceau est inférieure ou sensiblement égale à l'ouverture numérique de fibre.

12. Appareil d'hygiène buccale selon la revendication 8, dans lequel la source de lumière (140) est un laser, le laser ayant une fibre de sortie à fibre optique (172), la fibre de sortie à fibre optique (172) ayant une âme de fibre de sortie à fibre optique (174) et le coeur de fibre de sortie de fibre optique ayant un premier diamètre de coeur (176).

13. Appareil d'hygiène buccale selon la revendication 12, dans lequel la fibre diffusant la lumière (148) a une âme de fibre diffusant la lumière (150) ayant un second diamètre d'âme (180) où le premier diamètre d'âme et le second diamètre d'âme sont sensiblement égaux.

14. Appareil d'hygiène buccale selon la revendication 12, dans lequel le laser est optiquement couplé à la fibre diffusant la lumière (148) par une épissure de fibre (184) ou une lentille à indice de gradient (GRIN) (188).

15. Appareil d'hygiène buccale selon la revendication 14, dans lequel la lentille GRIN a une ouverture numérique de lentille GRIN inférieure ou sensiblement égale à une ouverture numérique de fibre (160) d'une âme de fibre diffusant la lumière (150) de la fibre diffusant la lumière (148).
